# EUROPÄISCHE PATENTSCHRIFT

(11) **EP 0 804 323 B1**
(45) Veröffentlichungstag und Bekanntmachung des Hinweises auf die Patenterteilung: **04.11.1998**
(21) Anmeldenummer: 96900267.4
(22) Anmeldetag: 10.01.1996
(51) Int. Cl.: B28B 1/00, G02B 6/42, G02B 6/36, B28B 11/08, B29D 11/00, G03F 7/00

(54) **ANORDNUNG ZUR UMSETZUNG VON OPTISCHEN IN ELEKTRISCHE SIGNALE UND VERFAHREN ZUR HERSTELLUNG**
ARRANGEMENT FOR CONVERTING OPTICAL INTO ELECTRICAL SIGNALS AND PROCESS FOR PRODUCING IT
SYSTEME PERMETTANT DE CONVERTIR DES SIGNAUX OPTIQUES EN SIGNAUX ELECTRIQUES ET PROCEDE DE PRODUCTION

(30) Priorität: 18.01.1995 DE 19501285; 21.12.1995 DE 19547941
(43) Veröffentlichungstag der Anmeldung: 05.11.1997
(73) Patentinhaber: ROBERT BOSCH GMBH, 70442 Stuttgart (DE)
(72) Erfinder: GRÜNWALD, Werner, D-70839 Gerlingen (DE); BENZ, Gerhard, D-71032 Böblingen (DE); MAYER, Klaus-Michael, D-70839 Gerlingen (DE); SEIBOLD, Annette, D-71277 Rutesheim (DE)
(86) Internationale Anmeldenummer: DE9600026
(87) Internationale Veröffentlichungsnummer: WO9622177

(56) Entgegenhaltungen:
- EP-A- 0 611 975
- WO-A-93/21550
- DE-A- 3 543 558
- DE-A- 4 106 721
- DE-A- 4 317 953
- DE-C- 4 300 652
- GB-A- 2 162 335
- US-A- 4 169 001
- US-A- 4 546 065
- BOSCH TECHNISCHE BERICHTE, Nr. 56, 1.Dezember 1994, Seiten 11-26, XP000500603 MULLER-FIEDLER R ET AL: "OPTOELEKTRONISCHE MIKROSYSTEME"

## Beschreibung

### Stand der Technik

Die Erfindung geht aus von einem Verfahren und einer Anordnung nach der Gattung der unabhängigen Ansprüche 1 und 15. Eine bekannte gattungsgemäße Anordnung (DE-PS 41 06 721) basiert auf einem Träger aus Silizium. Auf einer Oberfläche weist er mehrere, durch anisotropes Ätzen hergestellte V-Nuten auf, welche durch abgeschrägte, verspiegelte Stirnflächen abgeschlossen sind. Die V-Nuten dienen zur Fixierung von Lichtleitfasern, die verspiegelten Stirnflächen zur Umlenkung von über die Lichtleitfaser übertragenem Licht in eine Richtung senkrecht zur optischen Achse der Lichtleitfaser. Auf dem Siliziumträger befindet sich ein zweiter Träger aus lichtdurchlässigem Material, darauf wiederum Wandlerelemente zur Umwandlung von optischen in elektrische Signale. Durch den lichtdurchlässigen zweiten Träger wird letzteren das an den verspiegelten Stirnflächen der V-Nuten umgelenkte Licht zugeführt. In ein Siliziumsubstrat geätzte V-Nuten, wie sie bei dieser bekannten Anordnung verwendet werden, stellen hervorragende Faserführungsstrukturen dar. Auch sind die, entsprechend der Siliziumkristallstruktur unter 54 Grad geneigten Stirnflächen an den V-Nutenden, gut als Umlenkspiegel nutzbar. Allerdings ist das Ätzen eines solchen Substrates ein aufwendiges Herstellungsverfahren, da es einzeln erfolgen muß. Technisch bedingt ferner die Hochfrequenz der am Ausgang der Wandlereinrichtung anliegenden Signale, daß die von der Wandlereinrichtung wegführenden Leiterbahnen als elektrische Streifenleiter ausgeführt sind. Diese erfordern stets eine hinreichend gute elektrische Isolation, indem etwa zwischen Wandlereinrichtung mit Leiterbahnen und Siliziumträger eine dielektrische Schicht, zum Beispiel Polymid oder Glas, angeordnet wird. Aus technischen Gründen ist es auch wünschenswert, die von der Wandlereinrichtung gelieferten Signale auf einem möglichst kurzen Signalweg einer Signalvorverarbeitung zuzuführen. Sie sollte daher möglichst auf demselben Substrat unmittelbar an der Wandlereinrichtung plaziert sein. Eine diesen technischen Erfordernissen geügende Ausgestaltung des Substrates führt allerdings zu einem vergleichsweise großen Platzbedarf für jede Einzelanordnung, und damit zu einer Herabsetzung der möglichen Integrationsdichte der mechanischen Führungsstrukturen auf den Substraten. Es können dadurch aus einem Siliziumwafer jeweils nur verhältnismäßig wenige Einzelanordnungen gefertigt werden, wodurch sich entsprechend erhöhte Herstellungskosten ergeben.

Aus der DE-PS 43 00 652 ist der Vorschlag bekannt, eine integrierte optische Schaltung durch Eingießen eines elektrooptischen Halbleiterbauelementes auf einem Abformwerkzeug herzustellen. Als für das Gießen geeignetes Material sind Kunststoffe, insbesondere Polymere, offenbart.

Das Verfahren sieht eine Trennung von Substratherstellung und Mikromontage nicht vor. Eine kontrollierte Ausbildung von elektrischen und optischen Funktionsstrukturen auf der Substratoberfläche ist deshalb nicht möglich.

Aus der DE-OS 42 12 208 ist desweiteren der Vorschlag bekannt, Master-Strukturen in Kunststoffe abzuformen, um so eine kostengünstige Massenproduktion von Polymerbauelementen mit selbstjustierender Ankopplung von Faserführungsstrukturen an Lichtwellenbauelemente zu ermöglichen. Maßnahmen zur Ausbildung von elektrischen Strukturen sieht dieses Verfahren nicht vor.

Aus der DE-OS 43 17 953 ist ferner der Vorschlag entnehmbar, Führungsnuten für Glasfasern in Lichtwellenleiterführungselementen durch Spritzgießen in Kunststoff unter Verwendung eines Abformteiles herzustellen. Angaben zur Vorbereitung der dabei hergestellten Formteile für eine nachfolgende Montage von elektrischen Bauelementen macht die Schrift nicht. Auch gibt sie keine Hinweise auf für die Lichtwellenleiterführungselemente in Betracht kommende alternative Materialien.

Eine gattungsgemäße Vorrichtung ist aus DE-A-3 543 558 bekannt.

Der Erfindung liegt die Aufgabe zugrunde, ein Verfahren für eine wirtschaftlichere Herstellung einer gattungsgemäßen Anordnung sowie eine nach dem Verfahren herstellbare Anordnung anzugeben.

Diese Aufgabe wird gelöst durch ein Verfahren bzw. eine Anordnung mit den Merkmalen der Ansprüche 1 bzw. 20. Das vorgeschlagene Herstellungsverfahren basiert auf der an sich bekannten MIGA-Technik (Mikrostrukturierung-Galvanoformung-Abformung). Erfindungsgemäß wird diese Technik nunmehr auch zur Herstellung von Substraten für elektrooptische Anordnungen aus keramischem Grundmaterial eingesetzt. Auf solche Keramiksubstrate können elektronische Bauelemente sowie Leiterbahnen und Kontaktbefestigungen direkt aufgebracht werden. Ein besonderer Vorteil von Keramiksubstraten liegt in ihren bekannt guten Hochfrequenzeigenschaften bei gleichzeitig guter Wärmeleitfähigkeit. Auf einem Keramiksubstrat kann dadurch die gesamte zur Signalumsetzung benötigte Hochfrequenzelektronik für Übertragungsraten von typisch 11 Gigabit pro Sekunde aufgebaut werden. Auf diese Weise lassen sich leicht komplette Sende/Empfangsbausteine mit einigen Zentimeter Kantenlänge strukturieren.

Dadurch ist eine kostengünstige Massenfertigung von optischen Hochfrequenz-Sende- und Empfangsmodulen möglich. In vorteilhafter Weise können durch die Abformtechnik aufwendige Spiegelformen, wie zum Beispiel focussierende Parabolspiegel oder ähnliche strahlformende Elemente kostengünstig gefertigt werden. Die Spiegelmetallisierung kann dabei in vorteilhafter Weise in einem Arbeitsschritt mit der Elektrodenherstellung erfolgen.

Zweckmäßig erfolgt die Abformung durch ein Prägeverfahren. Sollen die auf der Oberfläche des keramischen Substates angelegten Stukturen besonders glatte Flächen aufweisen, erfolgt das Prägen vorteilhaft zweistufig. Vor dem zweiten Prägeschritt wird dabei ein glattsinterndes Material in die Mikrostruktur eingefüllt.

Weitere vorteilhafte Weiterbildungen bzw. zweckmäßige Ausgestaltungen des vorgeschlagenen Verfahrens bzw. der vorgeschlagenen Anordnung ergeben sich aus den Merkmalen der Unteransprüche.

Eine vorteilhafte Variante zur Herstellung besonders glatter Spiegelflächen sieht vor, auf die für den Spiegel vorgesehene Fläche vor dem Prägen lokal eine glattsinternde Glaspaste aufzubringen.

Eine weitere vorteilhafte Maßnahme zur Herstellung von Spiegeln mit besonders glatten Oberflächen sowie zur Erzeugung von Spiegeln mit beliebiger Geometrie besteht darin, in der zur Herstellung verwendetem Masterstruktur am Ende der V-Nuten jeweils eine Kaverne vorzusehen. Darin wird mit Hilfe von Konturmaterial die gewünschte Spiegelkontur angelegt. Die Kaverne erleichtert in vorteilhafter Weise zudem eine selektive Beschichtung der Spiegelfläche nach dem Prägen, beispielsweise mit Kunststoffen oder Lacken.

Neben dem Prägen kann die Herstellung des Keramiksubstrates in gleichermaßen vorteilhafter Weise auch in Gießtechnik, Schlickerguß oder Spritzgießtechnik oder Spritzprägetechnik erfolgen.

Eine vorteilhafte Möglichkeit zur Vermeidung des beim Sintern auftretenden Schrumpfes sieht vor, die zu sinternde Keramikform während des Sinterns mit Hilfe eines auf die geprägte Folie aufgesetzten Preßwerkzeuges unter Druck zu setzen. Als Preßwerkzeug kann in einfacher Weise das zum Prägen des keramischen Substrates verwendete Formwerkzeug eingesetzt werden.

Zur weiteren Senkung der Herstellungskosten ist es ferner zweckmäßig, die Formwerkzeuge durch Generationenbildung zu vervielfältigen.

Eine erfindungsgemäße Anordnung sowie ein erfindungsgemäßes Herstellungsverfahren werden nachfolgend unter Bezugnahme auf die Zeichnung näher erläutert.

### Zeichnung

Es zeigen Figur 1 eine vorgeschlagene Signalumsetzanordnung in Draufsicht sowie im Längsschnitt, Figur 2 ein Flußdiagramm des vorgeschlagenen Herstellungsverfahrens, Figur 3 ein Detail eines Formwerkzeuges, Figur 4 einen Querschnitt durch eine geprägte V-Nut vor und nach dem Sintern, Figur 5 einen Längsschnitt durch eine geprägte Mikrostruktur mit Lichtleitfaser zur Veranschaulichung der Auswirkungen des Schrumpfens beim Sintern, Figur 6 eine Veranschaulichung der Verwendung eines Preßwerkzeugs beim Sintern, Figur 7 eine Wandleranordnung mit Ellipsoidspiegel.

### Beschreibung der Ausführungsbeispiele

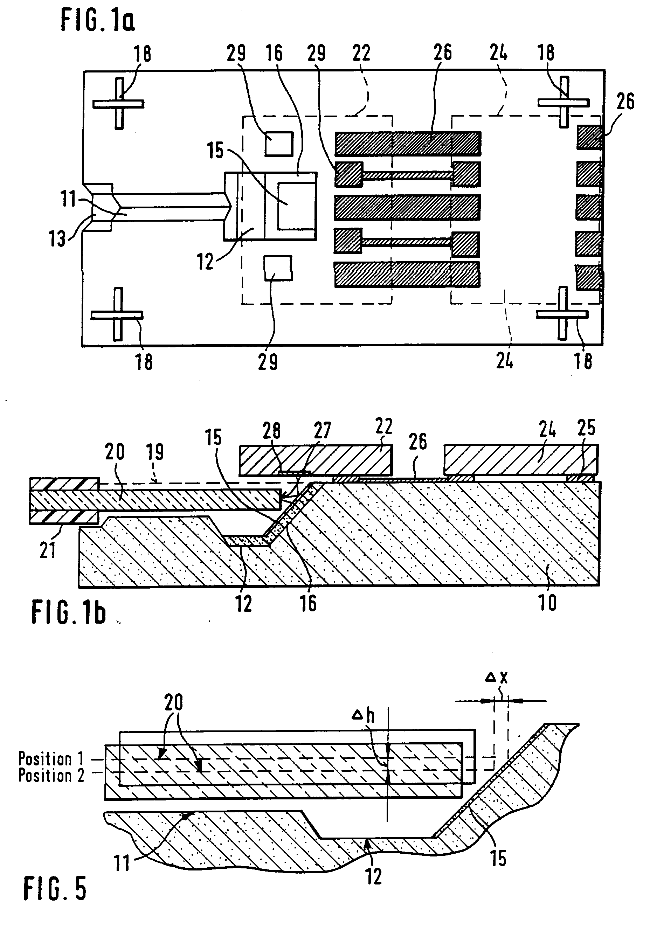

Figur 1 zeigt eine Wandleranordnung zur Umsetzung von optischen in elektrische Signale. Grundlage der Anordnung bildet ein keramisches Substrat 10. An seiner Oberseite weist es, verlaufend vom linken Seitenrand in Figur 1 bis etwa zur Mitte hin, eine Mikrostruktur 11, 12, 13 zur Fixierung einer Lichtleitfaser 20 auf. Die Mikrostruktur setzt sich dabei aus einem Zugabfang 13 zur Fixierung des eine Lichtleitfaser 20 umhüllenden Schutzmantels 21, einer V-Nut zur Führung einer Lichtleitfaser 20 sowie einer wannenförmigen Kaverne 16 im Bereich der Austrittsöffnung 27 der Lichtleitfaser 20 zusammen. Die der Austrittsöffnung 27 gegenüberliegende, und, bedingt durch die Siliziumkristallstruktur, schräg gegen die optische Achse der Lichtleitfaser 20 ansteigende Seitenwand der Kaverne 12, sowie, aus fertigungstechnischen Gründen, ein Teil des Bodens der Kaverne 12 sind mit einem Konturmaterial 16, zum Beispiel einer Glaspaste mit besonders glatter Oberfläche, belegt. Auf dessen Oberfläche, soweit sie der Austrittsöffnung 27 gegenüber bzw. im Strahlengang von über die Lichtleitfaser 20 übertragenem Licht liegt, ist ein Lichtumlenkelement 15 angeordnet, im Ausführungsbeispiel in Gestalt einer Spiegels. An dem Spiegel 15 wird das über die Lichtleitfaser 20 übertragene Licht in eine zur optischen Achse der Lichtleitfaser 20 geneigte Richtung reflektiert. Vorzugsweise erfolgt die Reflexion in einem Winkel von 90 Grad, der Spiegel 15 hat dann eine Neigung zur optischen Achse der Lichtleitfaser 20 von 45 Grad. Auf der Oberseite 19 des Keramiksubstrates 10 sind eine Empfänger- bzw. eine Sendeeinrichtung 22 sowie eine HF-(Hochfrequenz-)Vorverstärkereinrichtung 24 angeordnet. Beide Elemente 22, 24 sind vorzugsweise in Form von Chips ausgeführt. Sie sind mit dem Keramiksubstrat 10 über Kontaktflächen 29 verbunden, welche gleichzeitig zur Fixierung dienen. Über ebenfalls auf der Oberfläche 19 des Keramiksubstrates 10 aufgebrachte Leiterbahnen 26, welche alle oder teilweise als Streifenleiter ausgeführt sind, sind Sender/Empfänger-Chip 22 und HF-Vorverstärker 24 untereinander verbunden. Weitere, in gleicher Weise direkt auf das Keramiksubstrat 10 aufgebrachte Streifenleiter 26' dienen zur Einbindung der gesamten Wandleranordnung in die umgebende Elektronik. An seiner Unterseite, d.h. an der der Substratoberfläche 19 zugewandten Seite weist der Sender/Empfänger-Chip 22 ein Detektionsfenster 28 auf. Es befindet sich genau über dem Strahlfleck, den über die Lichtleitfaser 20 übertragenes und an dem Spiegel 15 reflektiertes Licht erzeugt. Im Falle einer Empfängereinrichtung ist das Detektionsfenster 28 in der Regel eine Fotodiode, welche über die Lichtleitfaser 20 übertragenes Licht empfängt. Im Falle einer Sendeeinrichtung ist das Fenster 28 beispielsweise eine oberflächenemittierende Laserdiode, welche über den Spiegel 15 Licht in die Lichtleitfaser 20 einspeist. Neben den betriebsrelevanten Strukturen befinden sich auf der Oberfläche 19 des Keramiksubstrates 10 weiterhin noch Justiermarken 18. Sie dienen zur Erleichterung der Maskenjustierung bei der Metallisierung sowie der Ausrichtung der elektronischen Komponenten 22, 24 relativ zur Führung 11 der Lichtleitfaser 20.
Ein wesentlicher Vorteil der in Figur 1 wiedergegebenen Anordnung besteht in der Verwendung eines keramischen Substrates 10. Dadurch kann eine zusätzliche Isolation der Leiterbahnen 26 und Kontaktflächen 25 von der Oberfläche 19 des Substrates 10 entfallen. Dies wiederum erlaubt es weiterhin, die Schritte Spiegelherstellung und Metallisierung der Leiterbahnen bzw. Kontaktflächen 25 zusammenzufassen.

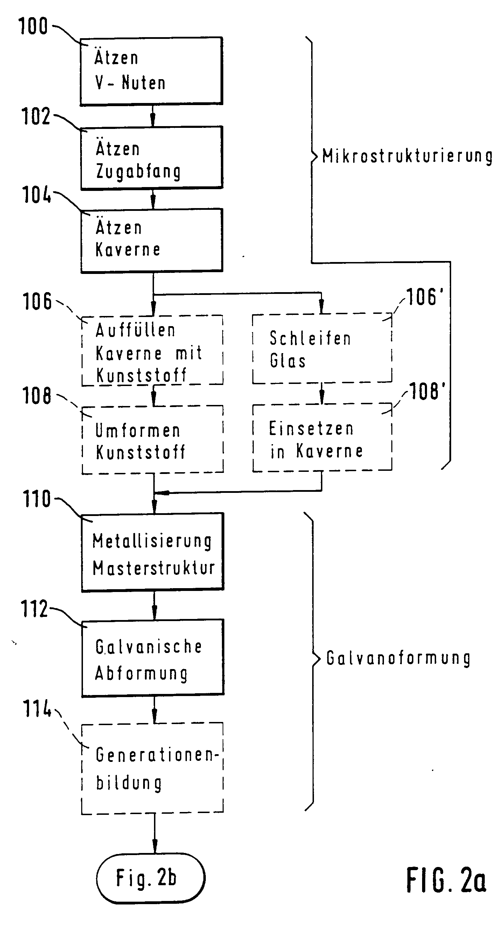

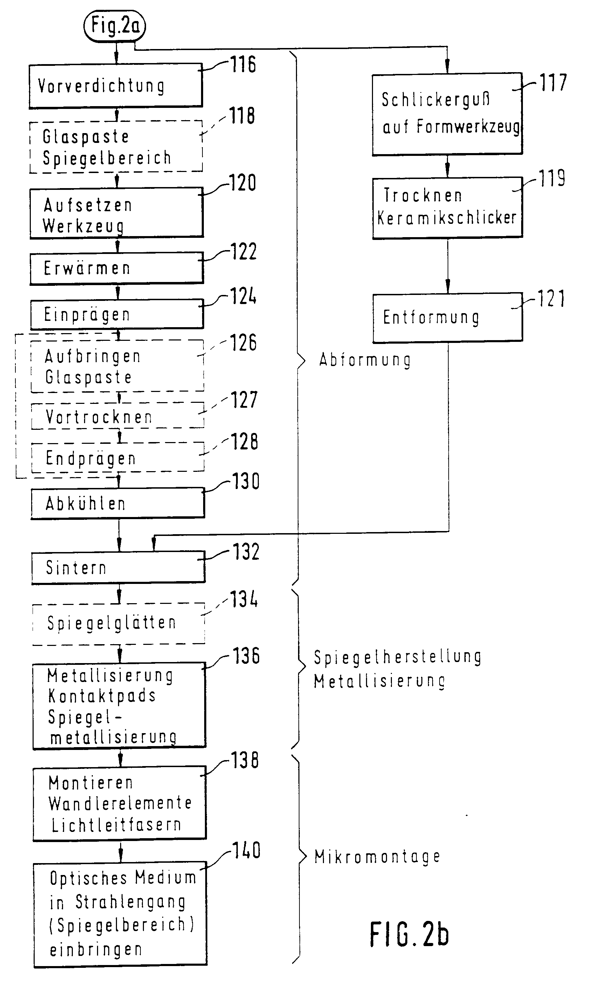

Figur 2 veranschaulicht anhand eines Flußdiagrammes den Ablauf eines zur Herstellung einer Anordnung nach Figur 1 geeigneten Verfahrens. Es gliedert sich in die Teilprozesse Mikrostrukturierung, Galvanoformung, Abformung, Spiegelherstellung und Metallisierung, sowie Mikromontage.

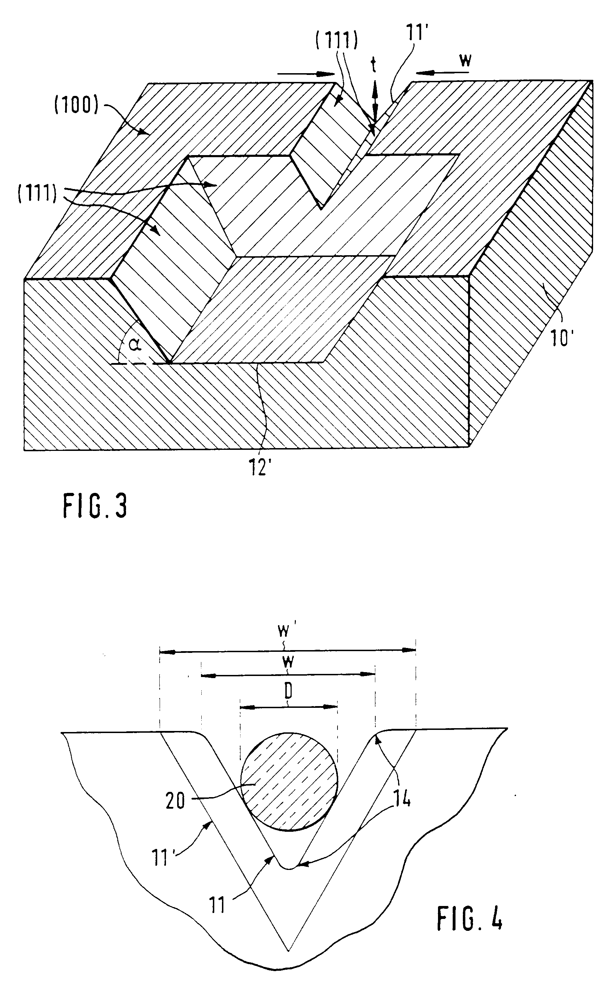

Der erste Verfahrensteilprozeß dient der Herstellung einer Masterstruktur für die Abformung. Zweckmäßig erfolgt dies durch bekannte Mikrotechniken, beispielsweise in Silizium-Mikromechanik. In einem Siliziumwaver werden dabei in einem ersten Schritt 100 in bekannter Weise, vorzugsweise mittels eines anisotropen Ätzprozesses in heißer KOH-Lösung, V-Nuten 11' eingeätzt, welche später als Führungsstrukturen für die Lichtleitfasern 20 dienen. Ihre Tiefe kann, da sich die Wände der V-Nuten entlang der (111-)Kristallflächen im Silizium stets unter 54,7 Grad Neigung ausbilden, in einfacher Weise durch die Öffnungsbreite der Lithografiemaske bestimmt werden. Die experimentelle Genauigkeit beträgt etwa 1 µm. Beispielsweise ergibt sich für eine Öffnungsweite einer V-Nut von w = 241,6 µm eine Tiefe von t = 170,8 µm. Eine in der Nut angeordnete, bündig mit der Oberfläche in dieser Nut abschließende Singlemode-Standardglasfaser müßte einen Radius von D = 125 µm aufweisen. An der Eintrittsseite der V-Nut in den Siliziumwafer 10' wird anschließend, Schritt 102, eine als Zugabfang dienende Vertiefung 13 eingeätzt. Ihre Maße richten sich nach dem Durchmesser des die Lichtleitfaser 20 umgebenden Schutzmantels 21. Am innerhalb des Siliziumwafers 10' liegenden Ende der V-Nut wird sodann im Schritt 104 eine wannenförmige Kaverne 12' eingeätzt. Ihre Wände verlaufen ebenfalls entlang den (111-)Kristallflächen des Siliziums und sind unter einem Winkel von 54,7 Grad gegen die Oberfläche des Substrates 10 geneigt. Sie sind jedoch, mit Ausnahme der die V-Nut 11' beinhaltenden, vom offenen Ende der V-Nut 11' entsprechend den gewählten Dimensionen der Kaverne 12' räumlich getrennt. Dies erleichtert zu einem späteren Zeitpunkt insbesondere die Metallisierung eines Spiegels 15 auf der dem offenen Ende der V-Nut 11' gegenüberliegenden Kavernenwand ohne Kontamination der Seitenwände der V-Nut 11'. Figur 3 zeigt zur Veranschaulichung des Verfahrensablaufs ein Detail einer Masterstruktur mit V-Nut 11' und Kaverne 12'. In vereinfachter Weise werden die Strukturen für Zugabfang, Faserführung und Spiegel in einem einzigen Maskenprozeß definiert und gemeinsam geätzt.

Ist aus Designgründen ein anderer Neigungswinkel des Spiegels 15 erwünscht, als der durch die (111-)Kristallflächen des Siliziums definerte von 54,7 Grad, kann ein speziell geschnittener Siliziumwafer benutzt werden, dessen Oberfläche in Richtung der Faserführungsnut 11' gegenüber der (III)-Oberfläche geneigt ist. Die Spiegelneigung weicht um den gewünschten Wert von 54° Grad ab. Alternativ können sich an das Ätzen der Kaverne 12' im Schritt 104 entsprechende Schritte zur Herstellung der gewünschten Spiegelneigung anschließen. Eine zweckmäßige Möglichkeit zur Erzeugung einer beliebigen Neigung des Spiegels 15, von zum Beispiel 45 Grad, sieht vor, die Kaverne 12' zunächst mit einem Konturmaterial 16, in einfache Weise einem Kunststoff, aufzufüllen, Schritt 106, welcher anschließend durch Einprägen einer unter dem gewünschten Winkel geschliffenen Schneide umgeformt wird, Schritt 108. Dabei eventuell in die V-Nut 11' gelangte Kunststoffreste können beispielsweise durch Laserablation selektiv entfernt werden. Eine andere, ebenfalls zweckmäßige Möglichkeit zur Erzeugung eines Spiegels 15 mit beliebiger Spiegelfläche sieht vor, die gewünschte Spiegelkontur beispielsweise in ein Pyrex-Glas zu schleifen, und dieses in die Kaverne 12' einzusetzen, Schritt 108'. Fixiert wird der Glaskörper zweckmäßig durch Direktbonden mit dem Silizium. In einer vorteilhaften Ausbildung wird in den Kunststoff eine Glaskugellinse teilweise eingeprägt und anschließend wieder entfernt, um einen fokussierenden Hohlspiegel zu definieren. Zwar ist eine Spiegelvorbereitung in der vorbeschriebenen Weise durch Hybridmontage aufwendig, jedoch ist der Aufwand einmalig. Durch die spätere Vervielfachung im Abformprozeß läßt er sich kompensieren.

Die vorbereitete Silizium-Masterstruktur wird metallisiert, Schritt 110, anschließend wird durch galvanische Abformung in an sich bekannter Weise ein metallisches Formwerkzeug hergestellt. Als im Hinblick auf die Herstellungskosten vorteilhafte Variante vor allem für die Massenfertigung bietet es sich an, von den metallischen Formwerkzeugen nach Bedarf weitere Kopien herzustellen. Dies kann erfolgen, indem die Galvanikoberfläche passiviert wird und anschließend Galvanik auf Galvanik gewachsen wird. Vom ersten Formeinsatz, der sogenannten Mutter, entsteht hierbei eine Zwischenkopie als erste Generation, hiervon wiederum durch nochmalige Abformung ein Formwerkzeug zweiter Generation. Da von einer Mutter viele Zwischenkopien und von jeder Zwischenkopie viele Formeinsätze der zweiten Generation kostengünstig entformt werden können, ist eine kosteneffektive Vervielfachung der Formwerkzeuge leicht möglich.

Im nächsten Teilprozeß, der Abformung, werden mit Hilfe der Formwerkzeuge keramische Substrate 10' hergestellt, welche Grundlage der Anordnung nach Figur 1 sind. Als Ausgangsmaterial bieten sich dabei gegossene Keramik-Grün-Tapes in Folienform an. Sie bestehen aus Compounds besonders feinkörniger Keramikpulver mit organischen Bindern, ihre Dicken liegen typischerweise im Bereich zwischen 100 und 800 µm. Zweckmäßig erfolgt in einem ersten Schritt 116 des Abformungsteilprozesses eine Vorverdichtung der Keramik-Folien durch Pressen. Durch die Maßnahme wird die Strukturtreue im späteren Sinterprozeß verbessert. Um eine ausreichend glatte Oberfläche des späteren Spiegels 15 sicherzustellen, kann anschließend auf die für den Spiegel 15 vorgesehene Fläche, d.h. die dem Ausgang der V-Nut 11 gegenüberliegende Seitenwand der Kaverne 12', eine glattsinternde Glaspaste lokal aufgedruckt werden, Schritt 118. Sodann wird im Schritt 120 das Formwerkzeug auf die in den Schritten 116 bzw. 118 vorbereitete Folie aufgesetzt. Die Folie, und wahlweise auch das Formwerkzeug, wird nun erwärmt, Schritt 122, anschließend wird das Formwerkzeug in die Folie eingeprägt, Schritt 124. Hierauf folgt ein Abkühlen der Folie bei konstantem Nachdruck, Schritt 130 sowie die Entformung. In einem nachfolgenden Sinterprozeß, Schritt 132, werden die geprägten Folien verdichtet.

Alternativ zum Prägen in Keramik-Grün-Tapes gemäß den Schritten 116 bis 130 kann die Abformung in vorteilhafter Weise auch durch Guß (Schlickerguß) von flüssigem Keramik-Schlicker auf ein Formwerkzeug, Schritt 117, erfolgen. Der Keramikschlicker wird anschließend getrocknet, Schritt 119, von dem Formwerkzeug entformt, Schritt 121, und wiederum gesintert, Schritt 132. Das Schlickergußverfahren zeichnet sich durch eine sehr gleichmäßige Materialverdichtung aus. Dadurch kann ungleichmäßiges Schrumpfen im anschließenden Sinterprozeß weitestgehend unterbunden werden.

Beim Sintern tritt, abhängig vom Compound, ein isotroper Schrumpf von typischerweise etwa 20% auf. Durch sorgfältige Steuerung des Sinterprozesses im Schritt 132, d.h. insbesondere durch genaue Übewachung der Temperaturen und der Sinterzeit, sowie durch geeignete Abstimmung von Prägeparametern, Pulverbeschaffenheit sowie Sinterparametern ist aber eine Reproduzierbarkeit der erzeigten Strukture mit einer Genauigkeit von < 1% des Schrumpfes möglich. Der Schrumpf kann dadurch bereits bei der Herstellung der Masterstrukturen im ersten Teilprozeß vorgehalten werden. Wird beispielsweise für die Breite der V-Nut 11 nach dem Sintern ein Sollmaß von w = 241,6 µm vorgegeben, muß die vorgehaltene Öffnungweite der V-Nut 11' vor dem Sintern bei einem 20%-igen linearen Schrumpf den Wert w' = 302 µm betragen. Figur 4 veranschaulicht den Einfluß des Schrumpfes beim Sintern anhand des Schrumpfes einer V-Nut. Der Sinterprozeß, Schritt 132, führt daneben leicht zu Verrundungen von Ecken und Kanten, wie in Figur 4 angedeutet. Da jedoch bezüglich der V-Nuten 11 nur die Seitenwände justagebestimmend sind, während die Grabenspitze der V-Struktur sowie die oberen Kanten nicht justagebestimmend wirken, kann der Problematik der Verrundungen durch ein geeignetes Design der Mikrostrukturen gut entgegengewirkt werden. Dies gilt insbesondere auch für die Spiegelflächen, da für die Funktion der Spiegel 15 als Umlenkelement ebenfalls nur die geneigte Fläche wesentlich ist, nicht aber die begrenzenden Kanten.

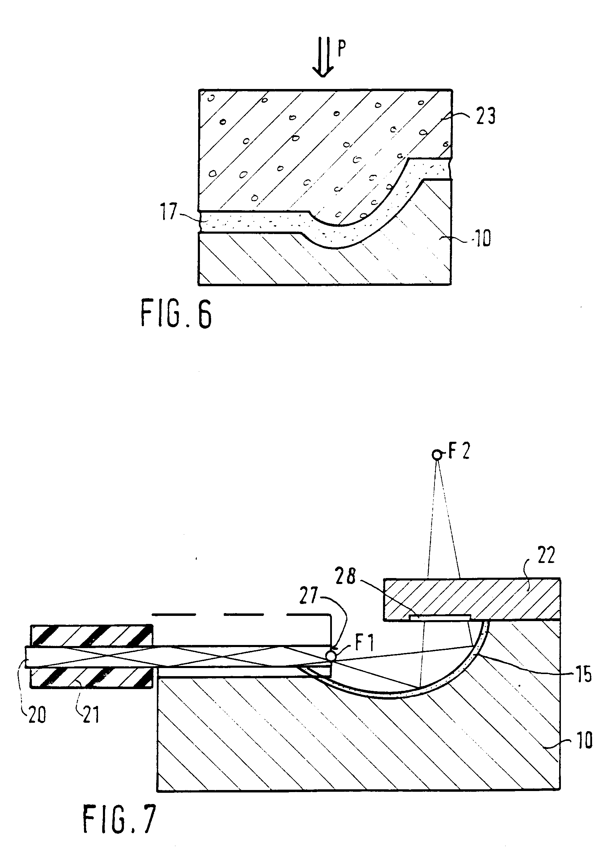

Wesentliche Folge des Schrumpfes ist, wie in Figur 5 dargstellt, eine Höhenverschiebung der optischen Achse der Lichtleitfaser 20 um einen Betrag Δh. Besonders leicht lassen sich die Auswirkungen des Schrumpfes beherrschen, wenn, wie in Figur 5 angenommen, ein unter 45 Grad gegen die optische Achse der Lichtleitfaser geneigter Spiegel 15 eingesetzt wird. Dieser reflektiert über die Lichtleitfaser 20 übertragenes Licht stets senkrecht nach oben. Der durch das Licht verursachte Strahlfleck bewegt sich dabei aufgrund des Schrumpfes um einen Betrag Δx in Richtung der optischen Achse der Lichtleitfaser 20, welcher mit der Höhenverschiebung Δh der Lichtleitfaser 20 übereinstimmt.

Eine vorteilhafte Möglichkeit, einen Schrumpf beim Sintern zu vermeiden, ist in Figur 6 veranschaulicht. Auf das geprägte keramische Substrat 10 wird dabei während des Sinterns ein Preßwerkzeug 23 gebracht. Es besteht aus einem feuerfesten Material, beispielsweise aus Siliciumnitrid (Si₃N₄) oder Aluminiumoxid (Al₂O₃) und ist an der Auflagefläche zum Keramiksubstrat 10 hin mit einem Trennmittel 17 beschichtet. Letzteres kann auch auf das Keramiksubstrat 10 aufgebracht werden. Die Oberfläche des Preßwerkzeugs 23 entspricht einer genauen Negativabform der geprägten Oberfläche des Keramiksubstrats 10. Mit Hilfe des Preßwerkzeugs 10 wird nun während des Sinterns ein Druck P auf das Keramiksubstrat 10 ausgeübt. Bei ausreichendem Druck P kann ein Schrumpf des Keramiksubstrats 10 nahezu vollständig vermieden werden, die beim Prägen erzeugten Strukturen bleiben maßgetreu erhalten.

Zweckmäßig ist das Preßwerkzeug 23 leicht porös ausgeführt, damit die beim Sinterbrand entstehenden Abgase durch das Preßwerkzeug 23 entweichen können. Ein Trennmittel 17 ist in der Regel erforderlich, um Preßwerkzeug 23 und Keramiksubstrat 10 nach dem Sintern wieder voneinander trennen zu können. Weiterhin kann ein einzelnes Werkzeug sowohl als Formwerkzeug zur Durchführung der Schritte 117 beziehungsweise 124 wie auch als Preßwerkzeug zur Verwendung in der vorstehend beschriebenen Weise vorgesehen sein. Besonders zweckmäßig ist dies, wenn die Abformung durch Keramik-Schlickerguß gemäß den Schritten 117 bis 121 erfolgt. In diesem Fall kann bereits das Formwerkzeug mit einem Trennmittel 17 beschichtet sein, so daß eine Entformung, Schritt 121 vor dem Sintern, Schritt 132 entfallen kann.

Um Substratstrukturen 11, 12, 13 mit besonders glatten Oberflächen zu erhalten, dies gilt insbesondere für die für den Spiegel 15 vorgesehene Fläche, kann statt einem einstufigen Prägen, Schritt 124, auch ein zweistufiges Prägen vorgesehen sein. Dabei wird die Folie im Schritt 124 zunächst mit vermindertem Prägedruck eingeprägt. Anschließend wird das Formwerkzeug angehoben und ein glattsinterndes Material, vorzugsweise ein Glaskeramikmaterial, in die erzeugte Struktur eingefüllt, Schritt 126. Gegebenenfalls wird das Material vorgetrocknet, Schritt 127. Danach erfolgt in einem zweiten Prägeschritt, Schritt 128 die endgültige Abformung.

An den Abformungs-Teilprozeß schließt sich die Spiegelherstellung/Metallisierung an. Ist die für den Spiegel 15 vorgesehene Fläche auf dem Keramiksubstrat 10 nach dem Prägen nicht ausreichend glatt, kann im Schritt 134 eine Spiegelglättung in Form einer selektiven Beschichtung der für den Spiegel 15 vorgesehenen Fläche erfolgen, zum Beispiel durch Sprühbeschichtung, mit einem Polymerfilm, wie etwa Fotolack, Polyimid, oder Benzozyklobuteyn. Ein solcher Polymerfilm glättet die beschichtete Oberfläche direkt, bzw. ggf. nach einmaligem Aufschmelzen. Eine weitere Glättung der Spiegelfläche kann durch glanzbildende galvanische Verstärkung der Metallisierung erreicht werden. Auf das fertig vorbereitete Keramiksubstrat 10 werden anschließend die elektrische Verdrahtung, welche in der Regel eine Hochfrequenz-Verdrahtung in Form von koplanar angelegten Streifenleitern beinhaltet, sowie die Kontaktflächen 29 (Kontaktpads) zum Anschluß für die elektrischen Bauelemente 22, 24 aufgebracht. Gleichzeitig, in einem gemeinsamen Maskenschritt erfolgt zweckmäßig die Metallisierung der Spiegelfläche. Die Maske wird dabei an den mitgeprägten Justiermarken 18 ausgerichtet, lateraler Schrumpf somit automatisch bei der Lage der Elektroden berücksichtigt.

Das metallisierte Keramiksubstrat 10 wird abschließend bestückt, Schritt 140. Zuerst wird in Flip-Chip-Technik, d.h. mit den Kontaktpads und dem Detektionsfenster 28 nach unten, der Sender/Empfängerchip 22 auf die vorbereiteten Kontaktflächen 29 aufgesetzt und mit dem Substrat verbunden (gebonded). Über die aufschmelzenden Lotkügelchen auf den Kontaktpads 29 ist hierbei in an sich bekannter Weise eine Selbszentierung möglich. Alternativ kann eine aktive Justage des Sender/Empfänger-Chips mit einer optischen Positioniervorrichtung erfolgen. Auch kann eine Empfangsdiode mit der Detektionszone nach oben über dem Spiegel 15 montiert werden, wenn das Wafermaterial für die zu empfangende Lichtwellenlänge tranparent ist. In gleicher Weise wird der Vorverstärkertip 24 aufgebracht. Danach wird die Lichtleitfaser 20 in die faserführende V-Nut 11 gelegt, unter den Chip 22 bis an den Spiegel 15 herangeschoben und fixiert.

Üblicherweise erfolgt die Signalübertragung über die beschriebene Wandleranordnung mit einer Übertragungsrate von 5 bis 11 Gigabit/Sekunde. Im Falle eines hochfrequenztauglichen Empfangs-Chips 22 darf die aktive Fläche der Diode 28 deshalb einen Durchmesser von etwa 50 µm nicht überschreiten, um die Diodenkapazitäten klein halten zu können. Andererseits ist die Strahlaufweitung des aus einer (Monomode)-Glasfaser austretenden Lichtes durch die Austrittsappertur der Faser gegeben. Beträgt diese beispielsweise N_{A} = 0,2 bei einem Abstand zwischen Austrittsöffnung 27 der Lichtleitfaser und der Diode 28 von ca. 130 µm und bei Verwendung eines 45-Grad-Spiegels 15, ergibt sich ein Strahlfleckdurchmesser von etwa 30 µm. Er liegt somit innerhalb der aktiven Fläche der Diode 28. Alles übertragene Licht wird deshalb sicher empfangen.

Zur weiteren Verbesserung der Empfangssicherheit, und um größere Montagetoleranzen zulassen zu können, ist eine weitere Verkleinerung des Strahlflecks auf der Diode zweckmäßig. Ein kleinerer Strahlfleck wird durch Einfüllen eines Mediums mit größerem Brechungsindex in die Kaverne 12 erreicht, Schritt 140. Beispielsweise läßt sich der Strahlfeck durch Einbringen eines optischen Epoxidklebers mit einem Brechungsindex von typischerweise n ∼ 1.5 auf etwa 20 µm verkleinern. Auf diese Weise ist ein hochbitratiges Empfangsmodul ohne weitere Strahlfocussierung möglich.

Eine Verkleinerug des Strahlfeckes und damit eine Verbesserung der Übertragungseigenschaften ist desweiteren auch durch Strahlfocussierung möglich. Der Spiegel 15 kann hierfür beispielsweise als Hohlspiegel ausgebildet sein.

Figur 7 zeigt als Beispiel für eine strahlfokussierende Spiegelausbildung eine Wandleranordnung mit einem Ellipsoidspiegel 15. Er ist so angeordnet, daß ein Brennpunkt F1 in der Mitte der Austrittsöffnung 27 der Lichtleitfaser 20 liegt, der andere F2 oberhalb des Sender/Empfängerelements 22. Der Lichtstrahl wird dadurch zum Sender/Empfängerelement 22 hin konvergent, wodurch das an diesem befindliche Detektionsfenster 28 erheblich leichter positionierbar ist. Die in Figur 7 wiedergegebene Spiegelgeometrie kann vorteilhaft durch ein Schlickergußverfahren erhalten werden, wobei während des Sinterns, Schritt 132, von der in Figur 6 angedeuteten Maßnahme Gebrauch gemacht und ein Druck auf die Spiegelstruktur 15 ausgeübt wird. Die Verspiegelung erfolgt dabei zweckmäßig mit einer tampongedruckten Platin-Resinatpaste, die beim Sintern unter Druck einen Platinspiegel liefert.

Unter Beibehaltung der zugrundeliegenden Konzepte ist eine Vielzahl von Ausgetaltungen der zuvor beschriebenen Anordnung bzw. des Verfahrens möglich. So ist das Herstellungsverfahren nicht auf eine Keramik-Prägetechnik beschränkt. Es ist vielmehr analog erweiterbar auf andere formbare Materialien, wie etwa thermoplastische Kunststofffe, Reaktionsgießharze, Schlickerguß, spritzfähige Keramikcompounds oder organisch modifizierte Keramiken. Grundsätzlich ist das Verfahren auch nicht auf die Herstellung von elektro-optischen Wandleranordnungen eingeschränkt, sondern gestattet ebenso beispielsweise die Hestellung von mikrooptischen Bänken. Hierbei werden neben Faserführungen in Form von V-Nuten vor allem auch Halterungen für andere mikrooptische Bauelemente, wie etwa optische Isolatoren, Mikrolinsen, Filterpättchen u.ä. geprägt.

## Patentansprüche

1. Verfahren zur Herstellung einer Anordnung zur Umsetzung von optischen in elektrische Signale, welche ein Substrat mit Strukturen zur Führung einer Lichtleitfaser sowie zum Umlenken von über die Lichtleitfaser übertragenem Licht aufweist, wobei die Strukturen (11, 12, 13) auf dem Substrat (10) durch Herstellen einer Abform von der Kontur eines Formwerkzeuges erzeugt werden, dadurch gekennzeichnet, daß für das Substrat (10) ein keramisches Grundmaterial verwendet wird, und die Abformung durch Prägen oder Gießen des keramischen Grundmaterials erfolgt.

2. Verfahren nach Anspruch 1, dadurch gekennzeichnet, daß die Abformung durch Guß von Keramik-Schlicker auf das Formwerkzeug erfolgt.

3. Verfahren nach Anspruch 1, dadurch gekennzeichnet, daß die Abformung durch Spritzprägen, Spritzgießen oder Reaktionsgießen erfolgt.

4. Verfahren nach Anspruch 1, dadurch gekennzeichnet, daß als Ausgangsmaterial für das Substrat (10) eine auf keramischem Grundmaterial basierende Folie verwendet wird.

5. Verfahren nach Anspruch 1, dadurch gekennzeichnet, daß das Keramiksubstrat (10) nach dem Prägen oder Gießen gesintert wird (132).

6. Verfahren nach Anspruch 4, dadurch gekennzeichnet, daß die Folie eine aus Compounds aus feinkörnigem Keramikpulver mit organischen Bindern aufgebautes Grüntape ist.

7. Verfahren nach Anspruch 4, dadurch gekennzeichnet, daß das Erzeugen der Strukturen auf einer Substratfolie folgende Schritte aufweist:
a) Aufsetzen eines Formwerkzeuges auf die Folie
b) Erwärmen der Folie
c) Einprägen des Formwerkzeuges in die Folie
d) Abkühlen der Folie.

8. Verfahren nach Anspruch 4, dadurch gekennzeichnet, daß die Substratfolie vor dem Einprägen des Formwerkzeuges flächig vorverdichtet wird (116).

9. Verfahren nach Anspruch 5, dadurch gekennzeichnet, daß das Substrat (10) beim Sintern mit Hilfe eines Preßwerkzeugs (23) unter Druck gesetzt wird.

10. Verfahren nach Anspruch 9, dadurch gekennzeichnet, daß zwischen Preßwerkzeug (23) und Substrat (10) ein Trennmittel (17) eingebracht wird.

11. Verfahren nach Anspruch 9, dadurch gekennzeichnet, daß das Preßwerkzeug (23) aus einem porösen Material besteht.

12. Verfahren nach Anspruch 9, dadurch gekennzeichnet, daß als Preßwerkzeug (23) das zum Herstellen der Strukturen (11, 12, 13) auf dem Substrat (10) verwendete Formwerkzeug eingesetzt wird.

13. Verfahren nach Anspruch 1, dadurch gekennzeichnet, daß auf das Substrat (10) vor dem Prägen eine glattsinternde Glaspaste aufgebracht wird (126).

14. Verfahren nach Anspruch 1, dadurch gekennzeichnet, daß zuerst ein erster Prägeschritt (124) mit vermindertem Prägedruck durchgeführt, auf die daraus erhaltene Mikrostruktur sodann ein glattsinterndes Material aufgebracht (126), und anschließend ein zweiter Prägeschritt (128) zur Herstellung der endgültigen Struktur durchgeführt wird.

15. Verfaren nach Anspruch 1, dadurch gekennzeichnet, daß die Struktur nach dem Aufbringen des glattsinternden Materials vorgetrocknet wird.

16. Verfahren nach Anspruch 1, dadurch gekennzeichnet, daß auf das strukturierte Substrat (10) in einem gemeinsamen Maskenschritt (136) Leiterbahnen (26) und Kontaktflächen (29) aufgebracht und die Lichtumlenkstruktur (15) metallisiert werden.

17. Verfahren nach Anspruch 1, dadurch gekennzeichnet, daß die Lichtumlenkstruktur (15) als Spiegel ausgebildet und die dafür vorgesehende Fläche zunächst geglättet, anschließend metallisiert wird.

18. Verfahren nach Anspruch 1, dadurch gekennzeichnet, daß die Lichtumlenkstruktur (15) als Spiegel ausgebildet ist, und die dafür vorgesehene Fläche zunächst eine metallische Grundmetallisierung erhält, anschließend durch planarisierende beziehungsweise glanzbildende Galvanik verstärkt wird.

19. Verfahren nach Anspruch 1, dadurch gekennzeichnet, daß der Bereich (12) der Lichtleitfaserführungsstruktur, wo sich die Austrittsöffnung (27) einer in die Führungsstruktur (11, 12, 13) eingesetzten Lichtleitfaser (2o) befindet, mit einem Material aufgefüllt wird, dessen Brechungsindex größer ist als 1.

20. Anordnung zur Umsetzung von optischen in elektrische Signale mit einem Substrat, in dessen Oberseite Strukturen zur Führung einer Lichtleitfaser eingeformt sind, und das weiterhin Mittel zum Umlenken von über eine Lichtleitfaser übertragenem Licht auf eine auf dem Substrat angeordnete Wandlereinrichtung zur Umwandlung optischer in elektrische Signale aufweist, dadurch gekennzeichnet, daß das Substrat (10) aus einem elektrisch isolierenden, keramischen Grundmaterial besteht, und die Lichtumlenkmittel (15) ebenfalls in die Oberseite des Substrates (10) eingeformt sind.

21. Anordnung nach Anspruch 20, dadurch gekennzeichnet, daß auf der Oberseite (19) des Substrates (10) weiterhin Leiterbahnen (26, 26') zur Übertragung der elektrischen Signale des Wandlerelementes (22) angeordnet sind.

22. Anordnung nach Anspruch 20, dadurch gekennzeichnet, daß die Mittel zum Umlenken von über die Lichtleitfaser übertragenem Licht ein Spiegel (15) mit frei vorgebbarer Kontur sind.

23. Anordnung nach Anspruch 20, dadurch gekennzeichnet, daß zwischen Austrittsöffnung der Lichtleitfaser (27) und Eingang (28) der Wandlereinrichtung (22) ein Material mit einer gegenüber Luft größeren Brechungsindex angeordnet ist.

24. Anordnung nach Anspruch 20, dadurch gekennzeichnet, daß anstelle der Empfangsdiode eine oberflächenemittierende Laserdiode eingesetzt wird, deren Licht über das Umlenkelement in eine Lichtleitfaser eingekoppelt wird.

## Claims

1. Method for producing an arrangement for converting optical signals into electrical signals, which arrangement has a substrate with structures for routing an optical fibre and for guiding light which is transmitted via the optical fibre, the structures (11, 12, 13) being produced on the substrate (10) by producing a cast from the contour of a mould, characterized in that a ceramic base material is used for the substrate (10) and the casting is carried out by stamping or pouring the ceramic base material.

2. Method according to Claim 1, characterized in that the casting is carried out by pouring ceramic slip onto the mould.

3. Method according to Claim 1, characterized in that the casting is carried out by injection-compression moulding, injection moulding or reaction injection moulding.

4. Method according to Claim 1, characterized in that a sheet based on a ceramic base material is used as the original material for the substrate (10).

5. Method according to Claim 1, characterized in that the ceramic substrate (10) is sintered (132) after the stamping or pouring.

6. Method according to Claim 4, characterized in that the sheet is a green tape formed from compounds of finely granular ceramic powder with organic binders.

7. Method according to Claim 4, characterized in that the production of the structures on a substrate sheet has the following steps:
a) placing a mould on the sheet
b) heating the sheet
c) stamping the mould into the sheet
d) cooling the sheet

8. Method according to Claim 4, characterized in that the substrate sheet is pre-compressed (116) flat before the stamping in of the mould.

9. Method according to Claim 5, characterized in that the substrate (10) is subjected to pressure with the aid of a pressing tool (23) during sintering.

10. Method according to Claim 9, characterized in that a separating means (17) is introduced between the pressing tool (23) and the substrate (10).

11. Method according to Claim 9, characterized in that the pressing tool (23) is made of a porous material.

12. Method according to Claim 9, characterized in that the mould which is used to produce the structures (11, 12, 13) of the substrate (10) is used as the pressing tool (23).

13. Method according to Claim 1, characterized in that a smooth-sintering glass paste is applied (126) to the substrate (10) before stamping.

14. Method according to Claim 1, characterized in that a first stamping step (124) with reduced stamping pressure is carried out first of all, a smooth-sintering material is then applied (126) to the microstructure resulting from this, and a second stamping step (128) is then carried out in order to produce the final structure.

15. Method according to Claim 1, characterized in that the structure is pre-dried before the application of the smooth-sintering material.

16. Method according to Claim 1, characterized in that interconnects (26) and contact surfaces (29) are applied to the structured substrate (10) in a joint masking step (136), and the light guidance structure (15) is metallized.

17. Method according to Claim 1, characterized in that the light guidance structure (15) is designed as a mirror, and the surface intended for this purpose is first of all smoothed and is then metallized.

18. Method according to Claim 1, characterized in that the light guidance structure (15) is designed as a mirror, and the surface intended for this purpose is first of all provided with metallic base metallization and is then reinforced by planarizing or gloss-forming electrochemical action.

19. Method according to Claim 1, characterized in that the area (12) of the optical fibre guidance structure where the outlet opening (27) of an optical fibre (20) which is inserted into the guidance structure (11, 12, 13) is located is filled with a material whose refractive index is greater than unit.

20. Arrangement for converting optical signals into electrical signals having a substrate in whose top structures for routing an optical fibre are formed and which furthermore has means for guiding light, which is transmitted via an optical fibre, onto a converter device, which is arranged on the substrate, for converting optical signals into electrical signals, characterized in that the substrate (10) is made of an electrically insulating, ceramic base material, and the light guidance means (15) are likewise formed in the top of the substrate (10).

21. Arrangement according to Claim 20, characterized in that interconnects (26, 26') for transmitting the electrical signals of the converter element (22) are also arranged on the top (19) of the substrate (10).

22. Arrangement according to Claim 20, characterized in that the means for guiding light which is transmitted via the optical fibre are a mirror (15) with a contour which can be freely predetermined.

23. Arrangement according to Claim 20, characterized in that a material having a refractive index greater than that of air is arranged between the outlet opening of the optical fibre (27) and the inlet (28) of the converter device (22).

24. Arrangement according to Claim 20, characterized in that a surface-emitting laser diode is used instead of the receiving diode, and its light is injected into an optical fibre via the guidance element.

## Revendications

1. Procédé de fabrication d'un dispositif pour convertir des signaux optiques en signaux électriques, comprenant un substrat avec des structures pour guider une fibre optique et dévier la lumière transmise par la fibre optique, les structures (11, 12, 13) étant réalisées sur le substrat (10) par fabrication d'une pièce moulée sur le contour d'un moule,
caractérisé en ce que
pour le substrat (10) on utilise une matière de base céramique et on moule par matriçage ou coulée d'une matière céramique de base.

2. Procédé selon la revendication 1,
caractérisé en ce que
le moulage se fait par coulée de barbotine de céramique sur un outil de moulage.

3. Procédé selon la revendication 1,
caractérisé en ce que
le moulage se fait par matriçage par projection, injection ou coulée avec réaction.

4. Procédé selon la revendication 1,
caractérisé en ce que
la matière première du substrat (10) est une feuille comportant la matière de base céramique.

5. Procédé selon la revendication 1,
caractérisé en ce que
le substrat en céramique (10) est fritté après matriçage ou coulée (130).

6. Procédé selon la revendication 4,
caractérisé en ce que
la feuille est un composé de poudre de céramique à grains fins et d'un liant organique constituant un ruban construit.

7. Procédé selon la revendication 4,
caractérisé en ce qu'
on réalise les structures sur la feuille de substrat selon les étapes suivantes :
a) mise en place d'un outil de moulage sur la feuille,
b) chauffage de la feuille,
c) impression de l'outil de moulage dans la feuille,
d) refroidissement de la feuille.

8. Procédé selon la revendication 4,
caractérisé en ce qu'
on précomprime la feuille de substrat en surface (116) avant d'imprimer l'outil de moulage.

9. Procédé selon la revendication 5,
caractérisé en ce qu'
on met le substrat (10) en pression pendant le frittage à l'aide d'un outil de pressage (23).

10. Procédé selon la revendication 9,
caractérisé en ce qu'
on applique un agent séparateur (17) entre l'outil de pressage (23) et le substrat (10).

11. Procédé selon la revendication 9,
caractérisé en ce que
l'outil de pressage (23) est une matière poreuse.

12. Procédé selon la revendication 9,
caractérisé en ce que
l'outil de pressage (23) est l'outil de moulage utilisé pour fabriquer les structures (11, 12, 13) dans le substrat (10).

13. Procédé selon la revendication 1,
caractérisé en ce qu'
on applique une pâte de verre lisse par frittage (126) sur le substrat (10) avant de le matricer.

14. Procédé selon la revendication 1,
caractérisé en ce qu'
on effectue tout d'abord une première étape de matriçage (124) avec une pression de matriçage réduite sur la micro-structure obtenue puis, on applique une matière lisse par frittage (126) puis on effectue une seconde étape de matriçage (128) pour réaliser la structure définitive.

15. Procédé selon la revendication 1,
caractérisé en ce qu'
on effectue un préséchage de la structure après application de la matière lisse par frittage.

16. Procédé selon la revendication 1,
caractérisé en ce que
sur le substrat structuré (10), on applique au cours d'une même étape de masquage (136), les chemins conducteurs (26) et des surfaces de contact (29) et on métallise la structure de déviation de la lumière (15).

17. Procédé selon la revendication 1,
caractérisé en ce que
la structure de déviation de la lumière (15) est en forme de miroir et la surface prévue à cet effet est tout d'abord lissée puis métallisée.

18. Procédé selon la revendication 1,
caractérisé en ce que
la structure de renvoi de la lumière (15) est en forme de miroir et la surface prévue pour cela reçoit tout d'abord une métallisation de base puis on renforce par une application galvanique améliorant la planéité ou renforçant la brillance.

19. Procédé selon la revendication 1,
caractérisé en ce que
la zone (12) de la structure servant à guider la fibre optique, à l'endroit où se trouve l'orifice de sortie (27) d'une fibre optique (20) placée dans la structure de guidage (11, 12, 13) est remplie d'une matière dont l'indice de réfraction est supérieur à 1.

20. Dispositif pour convertir des signaux optiques en signaux électriques comprenant un substrat dont la face supérieure comporte des structures pour guider une fibre optique et des moyens pour dévier la lumière transmise par la fibre optique sur un convertisseur placé sur le substrat pour convertir les signaux optiques en signaux électriques,
caractérisé en ce que
le substrat (10) est formé d'une matière de base céramique isolante électrique et le moyen de déviation de la lumière (15) est également formé sur la surface du substrat (10).

21. Dispositif selon la revendication 20,
caractérisé en ce que
la face supérieure (19) du substrat (10) comporte des chemins conducteurs (26, 26') pour transmettre les signaux électriques du convertisseur (22).

22. Dispositif selon la revendication 20,
caractérisé en ce que
les moyens pour dévier la lumière transmise par la fibre optique sont constitués par un miroir (15) à contour librement prédétermine.

23. Dispositif selon la revendication 20,
caractérisé en ce qu'
entre l'orifice de sortie de la fibre optique (27) et l'entrée (28) du convertisseur (22) on place une matière ayant un indice de réfraction supérieur à celui de l'air.

24. Dispositif selon la revendication 20,
caractérisé en ce qu'
à la place de la diode de réception, on utilise une diode laser à émission de surface dont la lumière est injectée dans la fibre optique par l'intermédiaire de l'élément déviateur.
